(19) Europäisches Patentamt
European Patent Office
Office européen des brevets

(11) Numéro de publication : **0 147 267 B2**

(12) **NOUVEAU FASCICULE DE BREVET EUROPEEN**

(45) Date de publication du nouveau fascicule du brevet : **26.01.94 Bulletin 94/04**

(51) Int. Cl.$^5$ : **C08G 69/48**

(21) Numéro de dépôt : **84402300.2**

(22) Date de dépôt : **13.11.84**

# (54) Production de macromères polyamides portant au moins une insaturation à chacune des deux extrémites de la séquence polyamide.

(30) Priorité : **23.11.83 FR 8318626**

(43) Date de publication de la demande : **03.07.85 Bulletin 85/27**

(45) Mention de la délivrance du brevet : **08.02.89 Bulletin 89/06**

(45) Mention de la décision concernant l'opposition : **26.01.94 Bulletin 94/04**

(84) Etats contractants désignés : **BE CH DE GB IT LI NL SE**

(56) Documents cités :
**EP-A- 0 143 037**
**DE-A- 1 917 798**
**DE-A- 2 452 109**
**US-A- 3 483 104**
**US-A- 4 402 879**
**CHEMICAL ABSTRACTS, vol. 87, no. 4, 25 juillet 1977, page 30, no. 24148b, Columbus, Ohio, US; & JP - A - 76 125 018 (PPG INDUSTRIES, INC.) 01-11-1976**

(56) Documents cités :
**CHEMICAL ABSTRACTS, vol. 87, no. 4, 25 juillet 1977, page 30, no. 24149c, Columbus, Ohio, US; & JP - A - 76 125 017 (PPG INDUSTRIES, INC.) 01-11-1976**
**CHEMICAL ABSTRACTS, vol. 87, no. 4, 25 juillet 1977, page 30, no. 24150w, Columbus, Ohio, US; & JP - A - 76 125 016 (PPG INDUSTRIES, INC.) 01-11-1976**
**Europ. Pol. J. 13, 1977, pp. 337-342**
**J. Pol. Sci.-Pol. Chem., Ed. 13, 1975, pp. 961-972**
**Coat. Plast. Prep. 34, 1974, pp. 162-172**

(73) Titulaire : **ELF ATOCHEM S.A.**
**4 & 8, Cours Michelet La Défense 10**
**F-92800 Puteaux (FR)**

(72) Inventeur : **Blondel, Philippe**
**Côte Saint-Michel Residence le Mont Joli No 2**
**F-27300 Bernay (FR)**
Inventeur : **Jungblut, Camille**
**Les Mollands Saint-Leger des Rostes**
**F-27300 Bernay (FR)**

(74) Mandataire : **Eggert, Hans-Gunther, Dr.**
**Räderscheidtstrasse 1**
**D-50935 Köln (DE)**



Jouve, 18, rue Saint-Denis, 75001 PARIS

## Description

La présente invention se rapporte à la fabrication de macromères polyamides, insaturés; elle concerne des séquences de longueur limitée de polyamide, se terminant à chacune de leurs deux extrémités par un motif renfermant au moins une double liaison. L'invention comprend également un procédé perfectionné pour la production de tels macroméres, ainsi que des applications de ceux-ci.

Trés peu de travaux ont été consacrés dans la technique antérieure à ce genre de polymères. Il apparaît que des polyamides, porteurs de plusieurs doubles liaisons, aient été, jusqu'à présent, préparés seulement en vue de l'obtention de polymères réticulables par des radiations ionisantes. D'après les publications de brevets Japonais JP-A-51 125 016, 51 125 017 et 51 125 018, résumés dans C.A. 87, 1977 références 24 148 à 24 150, et le brevet US-A-3 483 104, les produits en question sont préparés en deux étapes: d'abord chauffage d'un précurseur de polyamide avec un anhydride ou un chlorure d'acide carboxylique, ensuite réaction d'un composé acrylique avec l'oligomère obtenu. La réaction a lieu le plus souvent au sein d'un solvant, et les températures appliquées ne dépassent pas 200°C. Cette technique concerne des télomères porteurs de 2 à 4 doubles liaisons, la séquence de polyamide y étant assez courte, notamment ne dépassant pas 5 motifs de reste d'amino-acide par double liaison. D'après l'US précité il y a même une insaturation dans la séquence polyamidique elle-même. Il s'agit donc de corps à degré relativement élevé d'insaturation. Il s'avère que la composition finale, désirée, est difficile à obtenir par le réglage des proportions des matières de départ: des réactions secondaires font que les rapports initiaux d'anhydride ou chlorure d'acide, et de dérivé acrylique, au précurseur de polyamide, ne se retrouvent pas dans le télomère obtenu.

La présente invention fut motivée par la découverte qu'en dehors de la réticulation par radiations ionisantes, des macromères polyamidiques, porteurs d'une double liaison aux deux extrémités de chacune des chaînes, ont d'intéressantes applications, même lorsque le taux d'insaturation y est plus ou moins faible, par exemple de 1 double liaison pour 6 à 120 motifs d'acide aminé. Ainsi, par réticulation en présence de composés libérant des radicaux libres à températures élevées, de l'ordre de 180° à 300°C ou plus, peut-on obtenir des masses pour objets moulés, revêtements, joints d'étanchéité etc. Mélangés à de la poudre de polyamide, de tels produits permettent le revêtement de métaux avec une adhérence considérablement améliorée.

On peut représenter la macromolécule du produit selon l'invention par la formule générale suivante:

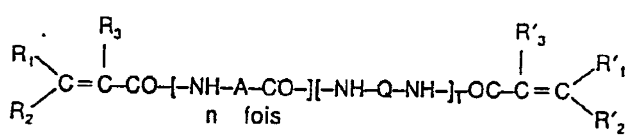

où -[-NH-Q-NH-]- représente le reste d'une diamine $NH_2$-Q-$NH_2$, où -[-NH-A-CO-]- représente une chaîne de polyamide aliphatique ou alicyclique de degré de polycondensation n, n pouvant varier de 2 à 240 et, plus particulièrement, de 10 à 50, et chacun des $R_1$, $R_2$, $R_3$ et $R'_1$, $R'_2$, $R'_3$ pouvant représenter l'hydrogène ou un groupe hydrocarboné aliphatique, cycloaliphatique ou aromatique. $R_1$, $R_2$, $R_3$ et $R'_1$, $R'_2$ et $R'_3$ sont identiques ou différents.

Les masses moléculaires de ces produits peuvent varier entre 340 et 20 000, et de préference entre 500 et 10 000.

Les produits se présentent le plus souvent sous la forme de solides blancs, plus ou moins friables suivant leur masse moléculaire.

Il est bien entendu que la chaîne de polyamide, dans ces produits, peut être formée par un copolymère ou/et par des unités polyamidiques porteuses de substitutions.

La plupart des macromères suivant l'invention fondent entre 130° et 250°C, et surtout entre 150° et 200°C.

Le nouveau procédé, suivant l'invention, permettant d'obtenir avec sûreté les macromères désirés, consiste à polymériser 2 à 240 moles d'un monomère de polyamide à au moins 5 atomes de carbone en une seule étape, en présence de 2 moles d'au moins un composé insaturé, de formule $R^1R^2C{=}R^3X$ où les groupes ou atomes $R^1$ à $R^3$, semblables ou différents sont H, halogène, alkyle ou aryle, en particulier phényle, norbornyle, thiényle, pyrrolyle ou furanyle, X étant : $-(CH_2)_nCOOH$ avec n = 0 à 17 ; $-CH_2-NH-(CH_2)_{11}-COOH$ ; Y-$C_6H_4$-$(CH_2)_{n'}$-COOR avec n' = 0 ou 1, et où Y est -COO-, -CO-NH-, R étant H, alkyle ou aryle ; $-CH_2OH$ ; $-(CH_2)_mNH_2$ avec m = 0 à 18. ou de formule

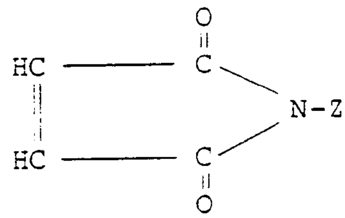

où Z désigne un grupe $-(CH_2)_{m'}$ -COOR ou $-C_6H_4$-COOR, R étant un alkyle, aryle ou H et m' un nombre entier de 1 à 17. ou de formule

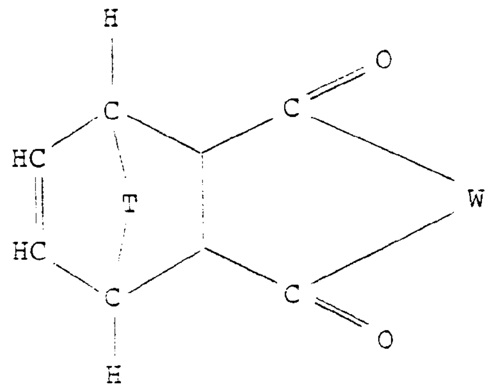

dans laquelle : T, quand il existe, représente $-CH_2$-W est >N-$C_6H_4$-COOR, ou >N-$(CH_2)_m$-COOR avec R étant H, un alkyle ou un aryle, et m = 1 à 17. ainsi qu'une mole d'un composé auxiliaire assurant la fixation du composé insaturé aux deux extrémités de la chaîne polyamide, les trois matières réagissantes étant maintenues à l'état fondu à une température supérieure à celle à laquelle fond leur combinaison finale, et comprise entre 200°C et 300°C, sous atmosphere de gaz inerte pendant une durée de 0,5 à 10 heures. Le composé auxiliaire est choisi parmi les diacides saturés ou diamines.

Ce procédé est réalisé en une seule étape, les trois sortes de matières réagissantes étant fondues ensemble et chauffées à une température supérieure à celle à laquelle fond leur combinaison finale. Cette température de chauffage est de préférence entre 210°C et 300°C, le plus souvent à 220°-280°C.

Le procédé diffère ainsi nettement de celui de la technique connue, rappelée plus haut, qui - elle - comprend au moins deux étapes et utilise des températures ne dépassant pas 200°C.

Il en résulte la possibilité d'obtention, suivant l'invention, de macromères dont la composition peut être connue comme le laisse prévoir la théorie et reproductible, à partir des proportions des réactifs mis en oeuvre, ce qui n'est pas le cas dans le procédé connu. En outre, l'invention rend possible la production d'une vaste gamme de macromères possédant 1 à plus de 120 motifs d'amino-acide par double liaison.

Suivant l'invention, le mélange chauffé est maintenu dans une atmosphère de gaz inerte, notamment d'azote. Le chauffage dure de 0,5 à 10 heures et plus souvent 1 à 6 heures, de préférence avec agitation.

Le précurseur de polyamide, c'est-à-dire le monomère susceptible de subir la polycondensation en polyamide, utilisé dans le procédé de l'invention, est constitué par un ou plusieurs oméga-amino acides, lactames, sels de diacides avec diamines ou des mélanges de diacides avec diamines. On peut, bien entendu, utiliser leurs mélanges, ce qui donne des copolyamides. Ainsi peut-on employer les composés couramment utilisés dans la fabrication de polyamides, par exemple: caprolactame, lauryl-lactame, acide amino-caproïque, oenantholactame, acides amino-7 heptanoïque, amino-11 undécanoïque, amino-12 dodécanoique; mélanges ou sels de diamines telles qu'hexaméthylène diamine, nonaméthylène diamine, undécaméthylène diamine, dodécaméthylène diamine, métaxylylène diamine, bis-p.amino-cyclohexylméthane, etc. avec des diacides comme téréphtalique, isophtalique adipique, azélaïque, sébacique, dodécane dicarboxylique et glutarique. Ces amines ou/et acides peuvent, bien entendu, porter des substituants connus dans l'art.

Les composés insaturés, porteurs des groupes susmentionnés, peuvent appartiennent au composés organiques des formules 1, 2 et 3.

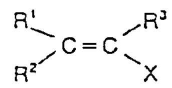 (1)

où les groupes ou atomes $R^1$, $R^2$ et $R^3$, semblables ou différents, sont: H, halogène, alkyle, aryle, en particulier phényle, et norbornyle, thiényle, pyrrolyle ou furanyle, tandis que le groupe actif X peut être: $-(CH_2)_nCOOH$ avec n = 0 à 17; $-CH_2-NH-(CH_2)_{11}-COOH$;

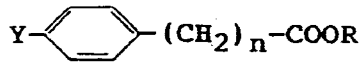

avec n' = 0 ou 1, Y étant -COO-,
-CONH-, R étant H, alkyle ou aryle;
$-CH_2OH$; $-(CH_2)_mNH_2$ avec m = 0 à 18.

Ainsi, des exemples particulièrement favorables des composés selon formule (1) sont-ils: acides ou esters des acides non saturés, acrylique, méthacrylique, cinnamique, crotonique, citraconique, itaconique, vinylacétique, undécylénique, maléique, fumarique, 5'-norbornène-2 acrylique, 3'-furanyl-2 acrylique, 3'-pyrrolyl-2 acrylique, N-allyl aminobenzoïque, N-acryloyl aminobenzoïque, N-méthacryloyl aminobenzoïque, acryloyl oxybenzoïque, méthacryloyl oxybenzoïque, N-acryloyl ou N-méthacryloyl p-aminophénylacétique et N-allyl amino-11-undécanoïque.

Les acides non saturés sont particulièrement intéressants, parce qu'ils jouent en méme temps le rôle de régulateur de chaîne, en bloquant une partie des groupes amines du précurseur de polyamide.

D'autres types de composés insaturés, convenant au procédé suivant l'invention, peuvent être représentés par la formule

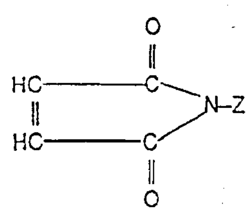 (2)

Z désignant un groupe $-(CH_2)_{m'}-COOR$ ou

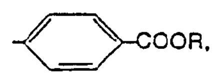

dans lequel R est un alkyle, un aryle ou H et m' un nombre entier de 1 à 17. Des exemples de tels composés sont les acides et les esters N-maléimido: hexanoïques, p.benzoïques, undécanoïques et dodécanoïques.

On peut également employer, en tant que composé insaturé, un corps bi- ou tri-cyclique du type

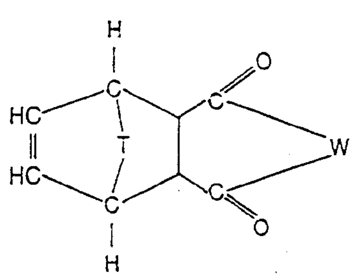 (3)

T désigne ici $-CH_2-$, mais peut ne pas exister, auquel cas le composé comprend seulement deux cycles. W est $>N-C_6H_4-COOR$ ou $>N-(CH_2)_m-COOR$, R étant un H, un alkyle ou un aryle et m = 1 à 17. A titre d'exemples non limitatifs de ces composés, on peut citer les imides dérivés des anhydrides tels que tétrahydrophtalique,

p.N-maléimido benzoïque, p[endo-cisbicyclo(2,2,1)-5 heptène-2,3 dicarboxylique].

Bien que l'invention ne soit pas limitée par un mécanisme des réactions impliquées, quelques-uns de ses aspects peuvent être illustrés par les schémas réactionnels suivants.

En chauffant n moles d'un oméga-amino acide $NH_2$-A-COOH avec 1 mole d'un acide éthylénique RCH-=CHR'COOH, on obtient un macromère:

$$RCH = CR'-CO-[NH-A-CO]_n-OH \quad I$$

(n fois) dont un bout de chaîne porte le groupe insaturé RCH=CH ... de l'acide employé.

Si l'on ajoute une diamine $NH_2$-Q-$NH_2$, elle donne au chauffage, avec l'autre bout de chaîne du macromère I, une terminaison aminée:

$$-CO-[NH-A-CO]_n-NH-Q-NH_2 \quad II$$

Par la réaction d'une seconde mole d'acide oléfinique RCH=CHR'COOH avec le macromère II, on amidifie le -$NH_2$ du composé II, ce qui donne un macromère III porteur de deux doubles liaisons, une dans chacune des chaînes terminales:

$$RCH = CR'CO-[NH-A-CO]_n-[NH-Q-NH]_1-OC-CR' = CHR \quad III$$

Un élément inattendu, dans le procédé de l'invention, apparaît en ce que les trois réactions ci-dessus, conduisant aux macromères I, II et III, sont réalisables en un seul temps, si l'on mélange d'avance n moles d'oméga amino acide avec 2 moles d'acide non saturé et 1 mole de diamine.

Ce qui précède donne une idée de la structure des macromères insaturés, obtenus suivant l'invention. On a déjà noté plus haut que ces polymères comportent en général 1 à 120 unités amidiques, provenant d'un oméga-amino acide, pour 1 d'un composé insaturé. Les masses moléculaires moyennes, en nombre, de ces macromères s'échelonnent entre 340 et 20 000 pour la di-insaturation.

Une application particulière des nouveaux macromères consiste à les mélanger à des polyamides usuels pour produire un revêtement sur du métal; il en résulte une adhérence bien meilleure que celle du polyamide classique, seul. On connaît, en effet, la technique selon laquelle un objet métallique à revêtir est d'abord chauffé, puis plongé dans la poudre de polyamide maintenue en suspension par fluidisation; la fusion du polymère sur la surface métallique, suivie d'une solidification, produit le revêtement. Cependant, l'adhérence des polyamides, surtout sur certains métaux, notamment sur tôle galvanisée, acier, aluminium ou zinc galvanisé, laisse à désirer. Cela oblige à faire subir au métal un traitement préalable, ou à le revêtir d'abord d'une couche de primaire d'accrochage, surtout s'il est destiné à un usage où il peut être exposé à l'action de l'eau chaude ou de la vapeur, comme c'est le cas des machines à laver. Or, les demandeurs ont constaté le fait imprévu que l'adhérence du polyamide devient bonne lorsqu'à la poudre utilisée on ajoute de la poudre d'un macromère insaturé suivant la présente invention. L'amélioration est particulièrement sensible en présence d'eau bouillante. Cela peut s'expliquer par la réticulation qui se produit pendant la formation du revêtement à chaud, et qui - d'ailleurs - renforce la résistance du revêtement à l'abrasion, aux solvants et aux intempéries. L'application des macromères suivant l'invention dispense d'un prétraitement du métal, notamment de l'application d'une couche primaire, d'où progrès technique indéniable.

Selon les cas, la proportion de macromère ajouté au polyamide peut varier entre toutes limites requises; elle est, en général, d'environ 1 à 30% en poids du polyamide, et le plus souvent de 3 à 15%.

L'invention est illustrée par les exemples non limitatifs qui suivent.

## EXEMPLE 1

Préparation d'um macromère à insaturations terminales, aux deux extrémités de la chaîne.

Dans un réacteur métallique de 2 litres de capacité, à trois tubulures: entrée de gaz, communication avec un système de distillation comprenant un condenseur relié à un récepteur de distillat ainsi qu'un agitateur à

ancre, on introduit 600 g (2,985 moles) d'acide amino-11-undécanoïque, 12,66 g (0,11 mole) d'héxaméthylènediamine et 18,7 g (0,22 mole) d'acide crotonique, soit 13,56 moles d'amino-acide pour 1 mole d'acide crotonique. Le réacteur est purgé à l'azote puis chauffé jusqu'à 240°C toutes vannes vermées. La durée de la montée en température est de 45 minutes environ. Après 1 heure de réaction sous agitation à 60 tours/mn, le réacteur est décomprimé, puis la réaction est poursuivie pendant 4 heures sous un courant d'azote de 30 l/h. En fin de réaction, on applique au réacteur un vide de 0,3 à 0,5 mbar pendant 30 minutes. Le macromère est ensuite soutiré dans un bac à eau puis séparé, séché dans une étuve sous vide à 50°C pendant 14 heures. La masse moléculaire moyenne en nombre, par viscosimétrie est trouvée égale à 5300. $[\eta] = 6{,}15 \cdot 10^{-4}\ \overline{M}n^{0,78}$.(m.crésol.25°C) Tf=180-181°C (DSC). Le produit obtenu est blanc, friable, inodore.

EXEMPLE 2 (Comparaison)

Préparation d'un macromère à insaturations terminales, aux deux extrémités de la chaîne.

Dans le réacteur de l'exemple 1, on traite 600 g (3,05 moles) de lauryllactame, 14,96 g (0,102 mole) d'acide adipique et 1,2 g d'acide hypophosphoreux comme catalyseur d'ouverture du cycle lactame. Après 3 purges à l'azote, le réacteur est chauffé à 260°C toutes vannes fermées et la réaction est poursuivie pendant 6 heures. Après refroidissement du réacteur on effectue un prélèvement (5 g) sur lequel est déterminée la masse moléculaire moyenne en nombre par le dosage des groupements carboxyliques puis on ajoute 23,2 g (0,2 mole) d'hexaméthylène diamine et 17,2 g (0,2 mole) d'acide crotonique, soit 1 mole de celui-ci pour 15,25 moles de lactame.

Le réacteur est chauffé pendant 2 heures, toutes vannes fermées, à 260°C, puis, après détente, pendant 6 heures à 250°C sous azote. Sur le produit obtenu on trouve: $[\eta]$ intrinsèque: $1{,}55 \cdot 10^{-3} \cdot \overline{M}n^{0,70}$ (m.crésol, 20°C) $\overline{M}n$ $(\eta)$ = 6500 Tf = 169°C.

Le produit obtenu est blanc, friable, inodore.

EXEMPLE 3

Comme dans l'exemple 1, la réaction est répétée avec 7 composés organiques différents, comportant un groupement carboxylique à l'une de leurs extrémités et un groupement insaturé à l'autre bout.

Le tableau 1 donne les valeurs des masses moléculaires et les températures de fusion des macromères synthétisés de cette manière, c'est-à-dire avec de l'acide amino-11 undécanoïque et l'héxaméthylène diamine.

TABLEAU 1

| Macromère | $\overline{M}n$ $(\eta)$ | Tf°C (DSC) |
|---|---|---|
| acrylate | 6800 | 190 |
| cinnamate | 6225 | 188 |
| crotonate | 5730 | 184 |
| méthacrylate | 5830 | 184 |
| tétrahydrophtalate | 5050 | 182 |
| undécylénate | 4720 | 179 |
| nadate | 5770 | 184 |

EXEMPLE 4

Application d'un macromère avec réticulation en présence de peroxyde.

Pour obtenir un mélange homogène, le macromère bi-crotonate $\overline{M}n$ 5300, obtenu selon l'exemple 1, est d'abord réduit en poudre de granulométrie ≦80 microns; il est mélangé avec une solution acétonique à 1,5% en poids de peroxyde de dicumyle que l'on évapore ensuite à sec. Des plaques réticulées sont obtenues par moulage en compression dans un moule en acier inoxydable de diamètre = 125 mm, épaisseur = 2 mm, placé entre les plateaux d'une presse chauffante, préchauffés à 210°C. Pressage: 210°C; 10 bars; 30 minutes.

Les plaques sont jaunes, lisses et homogènes.

Le taux de gel est de 100%, mesuré par traitement de 5 g de produit en poudre dans 250 ml de m-crésol pendant 24 heures sous agitation à la température ambiante.

La résistance de ce produit est excellente aux solvants acides ou basiques. Les proprietés mécaniques sont intéressantes, en particulier le fluage qui reste constant au bout de 96 heures.

TABLEAU 2

| | |
|---|---|
| ISO 899 Fluage sous 1 daNmm$^{-2}$: | Heures |
| | 24 48 96 |
| Allongement % | 7,3 7,9 7,9 |
| Essai au choc, Charpy | |
| sans entaille: +20°C | non cassé |
| (ISO 979) −40°C | non cassé |
| avec entaille: +20°C | 6,9 kJ m$^{-2}$ |
| −40°C | 4,4 kJ m$^{-2}$ |
| Module de rigidité en torsion | |
| (Clash et Berg: daNcm$^{-2}$ | 3085 |
| norme ASTM D 1043 | |
| Essai de traction: | |
| % allongement à la rupture | 38 |
| contrainte à la rupture daNmm$^{-2}$ | 3,2 |
| Température de fléchissement à la | |
| chaleur 455.10$^{-3}$ M Pa | |
| (66 psi): °C ASTM D648 | 52 |

EXEMPLE 5

Application de macromères di-insaturés, réticulés par des peroxydes.

Dans les mêmes conditions qu'à l'exemple 4, c'est-à-dire en présence de peroxyde, on a préparé des plaques avec des macromères du polyamide 11 bis-insaturés obtenus selon l'exemple 3.

La solidité des plaques est déterminée par pliage à 180°. Le tableau 3 donne les taux en gel % obtenus avec différents groupes insaturés.

TABLEAU 3

| Groupe insatureé du macromère | Pliage à 180° | Taux de gel (%) |
|---|---|---|
| bis acrylate | + | 100 |
| bis cinnamate | + | 92 |
| bis crotonate | + | 100 |
| bis acrylate de glycidyle | + | 100 |
| bis méthacrylate | + | 100 |
| bis méthacrylate de glycidyle | + | 100 |
| bis tétrahydrophtalate | − | 0 |
| bis undécylénate | − | 12 |
| bis nadate | + | 96 |

+: la plaque ne casse pas
−: la plaque casse

Ces produits peuvent être teintés dans la masse par incorporation du colorant désiré, avant réticulation.

EXEMPLE 6

Mélange de polyamide avec un macromère.

On mélange à sec, intimement, 95 parties en poids de poudre de polyamide-11 en particules de 80 à 200 µm, dans un mélangeur à ailettes, à rotation rapide, avec 5 parties de macromère polyamide-11-bis-crotonate de $\overline{M}n$ 5280. La poudre obtenue s'écoule librement. Elle est mise en suspension dans l'air pour former un lit fluidisé. Des revêtements sont effectués sur des plaquettes d'acier de 100 x 100 mm, sablées et préchauffées pendant 10 minutes à 330°C, puis trempées pendant 4 secondes dans le lit de poudre fluidisé.

Le revêtement est transparent, lisse, sans bulles. Il tient pendant 2000 heures à l'eau bouillante sans perdre

ses qualités d'adhérence. Les propriétés d'adhérence en particulier sont également conservées après 100 heures de brouillard salin.

Le tableau 4 ci-après résume ces résultats en comparaison avec ceux du même polyamide-11 témoin, sans addition de macromère.

TABLEAU 4

| Tenue à l'eau bouillante | Après 1 heure | | Après 2000 heures | |
|---|---|---|---|---|
| | PA11 | Mélange | PA11 | Mélange |
| Adhérence, selon norme NFT 58112 | 0 | 3,5–4 | 0 | 3,5–4 |
| Cheminement | 3,5 | 0 (excellent) | | 0 (excellent) |
| Cloquage ASTMD 71456 | – | 10 | – | 10 |

On voit que le mélange suivant l'invention conduit à un revêtement considérablement amélioré.

EXEMPLE 7

Application à une composition liquide pour revêtements.

On peut également utiliser ces macromères diinsaturés seuls pour revêtir des métaux, par exemple des surfaces métalliques planes comme des tôles, en continu. Le macromère de l'exemple 1 a été utilisé sous la forme suivante:

| | |
|---|---|
| bis crotonate de polyamide-11 de l'exemple 1 | 97,7 parties en poids |
| peroxyde de dicumyle | 1 partie en poids |

| | |
|---|---|
| adjuvants: PA57 (résine siliconée) | 0,3 partie en poids |
| «MODAFLOW» 25 h (résine acrylique) | 1 partie en poids |

Ce mélange est mis en suspension dans de l'alcool benzylique pris comme agent d'étalement dans la proportion pondérale 30 mélange/70 alcool. Le revêtement sur plaque d'aluminium est chauffé dans un four à 240°C pendant 1 minute. Il présente un bel aspect et adhère bien, directement sur support d'aluminium, sans l'intermédiaire d'une sous-couche; sa tenue aux chocs et à l'eau est excellente.

Voir tableau 5.

TABLEAU 5

| | Adhérence par test NFT 58112 | | | | | | | | | |
|---|---|---|---|---|---|---|---|---|---|---|
| Durée du taitement (heures) | Traitement à l'eau à 39°C | | | | | Traitement à l'eau à 100°C | | | | |
| | Adhérence | Choc | Pliage | Cheminement | Cloquage | Adhérence | Choc | Pliage | Cheminement | Cloquage |
| 0 | 4–3,5 | Bon | Bon | 0 | 10 | 4–3,5 | Bon | Bon | 0 | 10 |
| 300 | 4–3,5 | Bon | Bon | 0 | 10 | 3,5 | Bon | Bon | 0 | 10 |
| 2000 | 3–2,5 | Bon | Bon | 0 | 10 | 3,5 | Bon | Bon | 0 | 10 |

Cheminement = 0 = pas de cheminement
Cloquage = 10 = pas de cloques

EXEMPLE 8

Mélange d'un macromère avec du polyamide et réticulation par radations.

On mélange dans un tonneau:

| | |
|---|---|
| du polyamide-11 $\overline{Mn}$ = 7000 | 48 g |
| du macromère bis-cinnamate de polyamide-11 de $\overline{Mn}$ = 3000 | 48 g |
| de la benzophénone | 4 g |

Par compression on en fait un film de $^1/_{20}$ de mm qui est exposé pendant 15 secondes à des radiations U.V. produites par une lampe à mercure de 1800 W avec réflecteur elliptique dont le spectre se situe entre 240 et 400 nm. Le taux de gel est de 72%.

## Revendications

1. Procédé de production d'un macromère polyamide portant deux insaturations, dont une à chacune des deux extrémités de la séquence de polyamide, caractérisé en ce qu'il consiste à polymériser 2 à 240 moles d'un monomère de polyamide à au moins 5 atomes de carbone en une seule étape, en présence de 2 moles d'au moins un composé insaturé, de formule $R^1R^2C=R^3X$ où les groupes ou atomes $R^1$ à $R^3$, semblables ou différents sont H, halogène, alkyle ou aryle, en particulier phényle, norbornyle, thiényle, pyrrolyle ou furanyle, X étant : $-(CH_2)_nCOOH$ avec n = 0 à 17 ; $-CH_2-NH-(CH_2)_{11}-COOH$ ; $Y-C_6H_4-(CH_2)_{n'}-COOR$ avec n' = 0 ou 1, et où Y est -COO-, -CO-NH-, R étant H, alkyle ou aryle ; $-CH_2OH$ ; $-(CH_2)_mNH_2$ avec m = 0 à 18. ou de formule

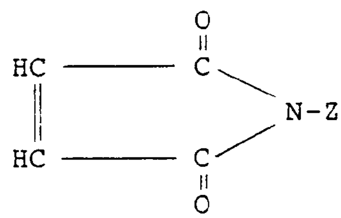

où Z désigne un groupe $-(CH_2)_{m'}$, -COOR ou $-C_6H_4-COOR$, R étant un alkyle, aryle ou H et m' un nombre entier de 1 à 17. ou de formule

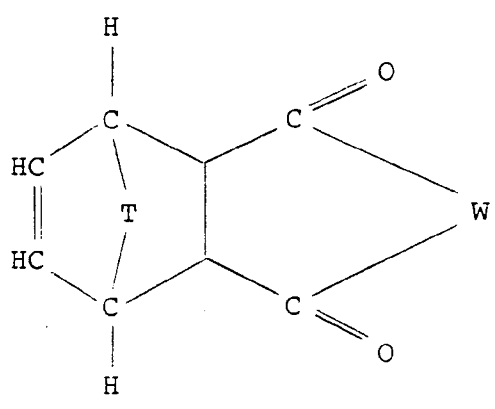

dans laquelle : T, quand il existe, représente $-CH_2-$ W est $>N-C_6H_4-COOR$, ou $>N-(CH_2)_m-COOR$ avec R étant H, un alkyle ou un aryle, et m = 1 à 17. ainsi qu'une mole d'un composé auxiliaire assurant la fixation du composé insaturé aux deux extrémités de la chaîne polyamide, les trois matières réagissantes étant maintenues à l'état fondu à une température supérieure à celle à laquelle fond leur combinaison finale, et comprise entre 200°C et 300°C, sous atmosphere de GAZ INERTE pendant une durée de 0,5 à 10 heures.

2. Procédé suivant la revendication 1, caractérisé en ce que la température de chauffage est comprise entre

210° et 300°C, plus particulièrement entre 220° et 280°C.

3. Procédé suivant la revendication 1, caractérisé en ce que le mélange contient 2 moles de composé insaturé et 1 mole de composé auxilliaire pour 12 à 240, et en particulier pour 20 à 100 moles d'un monomère de polyamide.

4. Procédé suivant la revendication 1, dans lequel le composé insaturé est l'acide acrylique ou méthacrylique.

5. Procédé suivant la revendication 1, dans lequel le composé insaturé est l'acide cinnamique, crotonique ou undécylénique.

6. Procédé suivant la revendication 1, caractérisé en ce que le composé insaturé est un acide ou ester N-maléimidohexanoique, p-benzoique, undécanoique ou dodécanoique.

## Patentansprüche

1. Verfahren zur Herstellung eines Polyamid-Makromeren, das zwei ungesättigte Bindungen aufweist, von denen sich jeweils eine an den beiden Enden der Polyamid-Sequenz befindet, dadurch gekennzeichnet, daß es darin besteht, 2 bis 240 Mol eines Polyamid-Monomeren mit mindestens 5 Kohlenstoffatomen in Gegenwart von 2 Mol wenigstens einer ungesättigten Verbindung der Formel $R^1R^2C=R^3X$,

wobei die Gruppen oder Atome $R^1$ bis $R^3$, die gleich oder verschieden sind, H, Halogen, Alkyl oder Aryl, insbesondere Phenyl, Norbornyl, Thienyl, Pyrrolyl oder Furanyl sein können, wobei X $-(CH_2)_n$ COOH mit n = 0 bis 17; $-CH_2-NH-(CH_2)_{11}-COOH$; $Y-C_6H_4-(CH_2)_n-COOR$ mit n' = 0 oder 1 ist und worin Y -COO-, -CO-NH- ist, wobei R gleich H, Alkyl oder Aryl ist; $-CH_2OH$; $-(CH_2)_m$ $NH_2$ mit m = 0 bis 18;
oder der Formel

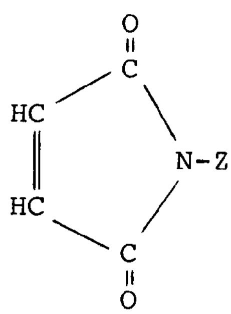

darstellt, in der Z einen Rest $-(CH_2)_{m'}-COOR$ oder $-C_6H_4-COOR$ worin R ein Alkyl, Aryl oder H und m' eine ganze Zahl zwischen 1 bis 17 ist;
oder der Formel

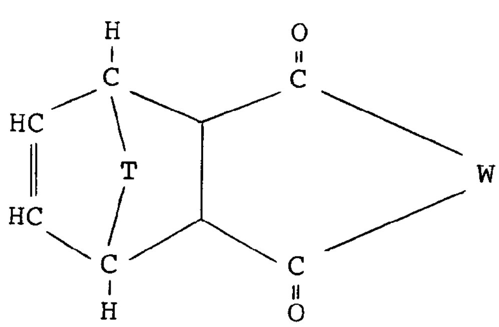

in der T, wenn vorhanden, $-CH_2-$ darstellt, W $>N-C_6H_4-COOR$ oder $>N-(CH_2)_m-COOR$ bedeutet, wobei R gleich H, Alkyl oder Aryl und m = 1 bis 17 ist;
sowie einem Mol einer Hilfsverbindung, die die Fixierung der ungesättigten Verbindung an beiden Enden

der Polyamid-Kette sicherstellt, in einem Schritt zu polymerisieren, wobei die drei reagierenden Stoffe in geschmolzenem Zustand unter Inertgasatmosphäre für eine Dauer von 0,5 bis 10 Stunden auf einer Temperatur über der jenigen gehalten werden bei der ihre endgültige Verbindung schmilzt, und die zwischen 200 und 300 °C liegt.

2. Verfahren nach Anspruch 1, dadurch gekennzeichnet, daß die Erwärmungstemperatur zwischen 210 und 300°C liegt, insbesondere zwischen 220 und 280°C.

3. Verfahren nach Anspruch 1, dadurch gekennzeichnet, daß die Mischung 2 Mol einer ungesättigten Verbindung und 1 Mol einer Hilfsverbindung auf 12 bis 240 Mol, insbesondere auf 20 bis 100 Mol eines Polyamid-Monomeren enthält.

4. Verfahren nach Anspruch 1, bei dem die ungesättigte Verbindung Acrylsäure oder Methacrylsäure ist.

5. Verfahren nach Anspruch 1, bei dem die ungesättigte Verbindung Zimtsäure, Crotonsäure oder Undecylensäure ist.

6. Verfahren nach Anspruch 1, dadurch gekennzeichnet, daß die ungesättigte Verbindung N-Maleimido-hexanon-, -p-benzoe-, -undecan- oder -dodecansäure oder deren Ester ist.

## Claims

1. Process for the production of a polyamide macromer carrying two unsaturations, one of which is at each of the two ends of the polyamide sequence, characterized in that it consists in polymerizing 2 to 240 moles of a polymamide monomer of at least 5 carbon atoms in one single phase, in the presence of 2 moles of at least one unsaturated compound of formula $R^1R^2C=R^3X$

wherein the $R^1$ to $R^3$ groups or atoms, similar or different, are H, halogen, alkyl or aryl, particularly phenyl, norbornyl, thienyl, pyrrolyl or furanyl, X being $-(CH_2)_n$ COOH with n = 0 to 17; $-CH_2-NH-(CH_2)_{11}-COOH$;

$Y-C_6H_4-(CH_2)_n-COOR$ with n' = 0 oder 1 and wherein Y is -COO-, -CO-NH-, R being H, alkyl oder aryl; $-CH_2OH$; $-(CH_2)_m NH_2$ with m = 0 to 18;
or of the type

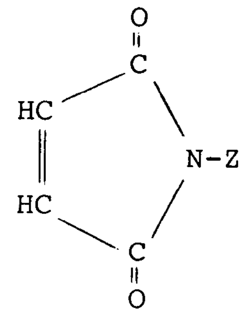

wherein Z represents a $-(CH_2)_{m'}-COOR$ or $-C_6H_4-COOR$ group, wherein R is an alkyl, aryl oder H and m' being an integer between 1 and 17;
or of the type

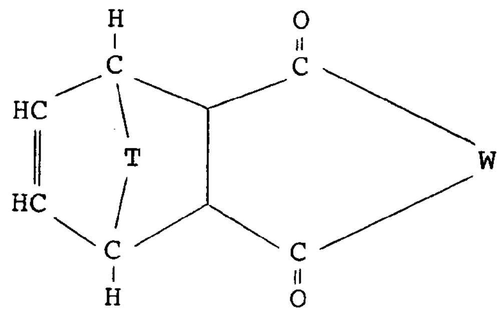

wherein T, if present, designates $-CH_2-$, W represents $>N-C_6H_4-COOR$ or $>N-(CH_2)_m-COOR$, with R being H, alkyl or aryl and m = 1 to 17;
as well as one mole of an auxiliary compound assuring the fixing of the unsaturated compound at both ends of the polyamide chain, the three reacting materials being held under inert atmosphere for a period of 0,5 to 10 hours in the molten state at a temperature above that at which their final combination melts and which is between 200 and 300°C.

2. Process according to claim 1, characterized in that the heating temperature is between 210 and 300°C, more particularly between 220 and 280°C.

3. Process according to claim 1, characterized in that the mixture contains 2 moles of the unsaturated compound and 1 mole of the auxiliary compound per 12 to 240, particularly per 20 to 100 moles of a polyamide monomer.

4. Process according to claim 1, wherein the unsaturated compound is acrylic or methacrylic acid.

5. Process according to claim 1, wherein the unsaturated compound is cinnamic, crotonic or undecylenic acid.

6. Process according to claim 1, characterized in that the unsaturated compound is N-maleimido hexanoic, p-benzoic, undecanoic or dodecanoic acid or ester.